**Europäisches Patentamt**

**European Patent Office**

**Office européen des brevets**

(19)

(11) Veröffentlichungsnummer : **0 365 747 B1**

## (12) EUROPÄISCHE PATENTSCHRIFT

(45) Veröffentlichungstag der Patentschrift :
16.10.91 Patentblatt 91/42

(51) Int. Cl.⁵ : **G01B 7/28, G01B 21/20**

(21) Anmeldenummer : **89111890.3**

(22) Anmeldetag : **30.06.89**

(54) **Vorschubgerät zur linearen Bewegung eines Längenmesstasters sowie Verfahren zur Abtastung der Gestalt einer Oberfläche eines Werkstücks.**

(30) Priorität : **02.08.88 DE 3826195**

(43) Veröffentlichungstag der Anmeldung :
**02.05.90 Patentblatt 90/18**

(45) Bekanntmachung des Hinweises auf die
Patenterteilung :
**16.10.91 Patentblatt 91/42**

(84) Benannte Vertragsstaaten :
**CH FR GB IT LI SE**

(56) Entgegenhaltungen :
**DE-A- 3 205 894**
**DE-C- 3 543 906**

(73) Patentinhaber : **Hommelwerke GmbH**
**Alte Tuttlinger Strasse 20**
**W-7730 VS-Schwenningen (DE)**

(72) Erfinder : **Dreier, Bernd**
**Augusta Anlage 49**
**W-6800 Mannheim 1 (DE)**

(74) Vertreter : **Leine, Sigurd, Dipl.-Ing. et al**
**LEINE & KÖNIG Patentanwälte**
**Burckhardtstrasse 1**
**W-3000 Hannover 1 (DE)**

## Beschreibung

Die Erfindung betrifft ein Vorschubgerät der im Oberbegriff des Anspruchs 1 genannten Art sowie ein Verfahren der im Oberbegriff des Anspruchs 2 genannten Art zur Abtastung der Gestalt einer Oberfläche eines Werkstücks entlang einer Abtastlinie.

Bei Vorschubgeräten der betreffenden Art wirken sich Führungsfehler bei der Führung des Längenmeßtasters entlang der Oberfläche eines Werkstücks auf die Meßgenauigkeit aus. Aus diesem Grunde sind die Führungen der Vorschubgeräte zur Bewegung eines Längenmeßtasters über die Oberfläche eines Werkstücks zur Messung der Oberflächengestalt desselben mit hoher Präzision gefertigt und daher teuer. Vermeidbar sind dabei Meßfehler durch Führungsfehler nicht, sie können durch hohe Präzision lediglich klein gehalten werden.

Durch die DE-C-3543906 ist eine Einrichtung zur Messung der Gestalt einer Oberfläche entlang einer Abtastlinie mit einem Vorschubgerät gemäß dem Oberbegriff des Anspruchs 1 bekannt. Das Vorschubgerät weist dabei einen Geber zur weggerechten Aufzeichnung der Werte des Längenmeßtasters auf.Mittel zur Entfernung von Führungsfehlern sind nicht vorgesehen.

Der Erfindung liegt die Aufgabe zugrunde, ein Vorschubgerät der betreffenden Art zu schaffen, mit dem eine vollständige Korrektur der gemessenen Werte im Bezug auf Fehler möglich ist, die durch Führungsfehler des mechanischen Vorschubgerätes ergeben. Außerdem ist es Aufgabe der Erfindung, allgemein ein Verfahren zur Korrektur im Hinblick auf Führungsfehler anzugeben.

Die der Erfindung zugrunde liegende Aufgabe wird bei einem Vorschubgerät durch die im Patentanspruch 1 angegebene Lehre gelöst. Die verfahrensmäßige Lösung ist im Patentanspruch 2 angegeben.

Der Grundgedanke der Erfindung besteht darin, die niemals vermeidbaren Führungsfehler wegabhängig festzustellen und zu speichern, um sie dann später bei der Messung der Oberfläche eines Werkstücks weggerecht der Meßspannung hinzufügen zu können, die dadurch von führungsbedingten Meßfehlern völlig befreit wird.

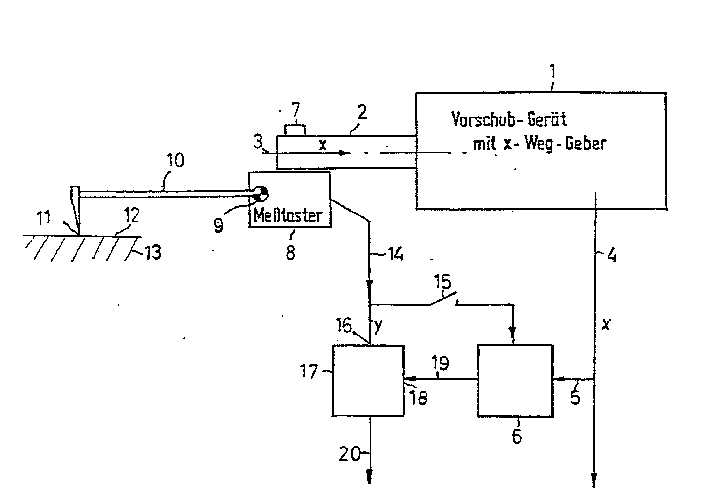

Anhand der Zeichnung soll die Erfindung näher erläutert werden.

Ein Vorschubgerät 1 weist eine Stange 2 auf, die in einer durch einen Pfeil 3 angedeuteten x-Richtung verschieblich geführt und durch nicht dargestellte Antriebsmittel bewegbar ist. Der Stange 2 ist innerhalb des Vorschubgerätes 1 außerdem ein Weggeber zugeordnet, der über eine Leitung 4 wegabhängige Signale abgibt, die über eine Leitung 5 an einen Korrekturspeicher 6 angelegt sind.

Am äußeren Ende der Stange 2 befindet sich eine Halterung 7 für einen Meßtaster 8, der einen um ein Drehlager 9 verschwenkbaren Meßarm 10 aufweist, an dessen Ende sich eine Tastspitze 11 befindet, die auf einer idealen Oberfläche 12 eines Normstückes 13 aufliegt.

Der Meßtaster 8 gibt über eine Leitung 14 Meßsignale, in der Regel eine Meßspannung, ab, die den Bewegungen der Tastspitze 11 entsprechen und über einen Schalter 15, wenn dieser geschlossen ist, dem Korrekturspeicher 6 zuführbar sind.

Die Leitung 14 führt außerdem zu einem Additionseingang 16 einer Additionseinrichtung 17, deren anderer Additionseingang 18 über eine Leitung 19 Korrektursignale von dem Korrekturspeicher 6 weggerecht erhält.

Bei Verwendung des in der Zeichnung dargestellten Gerätes wird zunächst in der dargestellten Weise das Normstück 13 mit seiner idealen Oberfläche 12 unter die Tastspitze 11 gebracht und dann bei geschlossenem Schalter 15 ein Meßlauf durchgeführt, so daß in dem Korrekturspeicher 6 weggerecht die auf der Leitung 15 abgegebene Meßspannung des Meßtasters 8 gespeichert wird. Geht man davon aus, daß die Oberfläche 12 wirklich ideal ist, oder ihr sehr nahekommt, so folgt, daß so die in dem Korrekturspeicher 6 gespeicherten Werte nur auf Führungsfehler der Stange 2 beruhen können. Soll nun die Oberfläche eines wirklichen Werkstückes geprüft werden, so wird dieses mit seiner Oberfläche unter die Tastspitze 11 gebracht und ein Abtastlauf durchgeführt, während der Schalter 15 offen ist. In diesem Falle steuert der Weggeber des Vorschubgerätes 1 über die Leitungen 4 und 5 die weggerechte Abgabe von Korrekturwerten aus dem Korrekturspeicher 6 über Leitung 19 und Additionseingang 18 zu der Additionseinrichtung 17, an deren Additionseingang 16 die Meßsignale von dem Meßtaster anliegen, die von der gemessenen Oberfläche des Werkstückes herrühren. An Ausgangsleitung 20 der Additionseinrichtung 17 erscheinen somit korrigierte Meßsignale, die frei von Fehlern sind, die durch mechanische Führungsfehler der Stange 2 verursacht sind.

Die weggerechte Verarbeitung und Speicherung von Meßsignalen, wie sie auch bei dieser Erfindung erfolgt, sind allgemeiner Stand der Technik und beispielsweise in eingangs genannten DE-C-3543906 beschrieben.

## Patentansprüche

1. Vorschubgerät zur linearen Bewegung eines Längenmeßtasters zur Abtastung der Gestalt einer Oberfläche entlang einer Abtastlinie, mit einer Stange, die Verschieblich in einer Führung gehalten und mit einer Antriebseinrichtung verbunden ist und eine Halterung für einen Längenmeßtaster sowie einen Weggeber aufweist, der von der Verschiebelage der Stange abhängige Signale abgibt, **gekenn-**

zeichnet durch

einen mit dem Weggeber verbundenen und an einen Längenmeßtaster (8) anschließbaren, insbesondere digitalen Korrekturwertspeicher (6) zur Speicherung der Werte der Abweichung der Bahn der Halterung (7) und damit eines Längenmeßtasters (8) von einer Geraden in Abhängigkeit von dem Bewegungsort der Halterung (7),

eine Additionseinrichtung (17), die an den Weggeber angeschlossen ist und an deren einen Additionseingang (18) der Korrekturwertspeicher (6), an deren anderen Additionseingang (16) ein von der Halterung (7) gehaltener Längenmeßtaster (8) angeschlossen oder anschließbar ist und die die Werte der Abweichungen vorzeichenrichtig im Sinne einer Korrektur der Längenwerte des Längenmeßtasters (8) diesen ortsabhängig hinzufügt, derart, daß an dem Ausgang der Additionseinrichtung die von den Abweichungen befreiten Werte des Längenmeßtasters (8) abnehmbar sind.

2. Verfahren zur Abtastung der Gestalt einer Oberfläche eines Werkstücks entlang einer Abtastlinie mittels des Vorschubgeräts nach Anspruch 1, **dadurch gekennzeichnet,** daß zunächst ein Werkstück mit einer ideal ebenen Oberfläche, insbesondere ein Planglas, abgetastet wird, daß die dabei gemessenen Oberflächenwerte wegabhängig gespeichert werden, daß danach die Oberfläche eines Werkstücks abtastet und die dabei gemessenen Oberflächenwerte weggerecht mit den wegabhängig gespeicherten Werten korrigiert werden.

## Claims

1. A feed apparatus for the linear movement of a length measuring sensor for sensing the shape of a surface along a sensing-line, having a rod which is held displaceably in a guide and connected to a driving mechanism and exhibits a mounting for a length measuring sensor as well as a distance-transmitter which emits signals dependent upon the position of displaement of the rod, **characterized by**

a correcting-value store (6), in particular a digital store, which is connected to the distance-transmitter and may be connected to a length measuring sensor (8) for storage of the values of the deviation of the path of the mounting (7) and thereby of a length measuring sensor (8) from a straight line in dependence upon the location of the mounting (7) as it moves,

an adding device (17) which is connected to the distance-transmitter and to one addition input (18) of which is or may be connected the correcting-value store (6) whilst a length measuring sensor (8) held by the mounting (7) is or may be connected to the other addition input (16), the said adding device adding the values of the deviations to the values of the lengths from the length measuring sensor (8) with the correct sign in the sense of a correction of the latter so that at the output from the adding device the values from the length measuring sensor (8), freed of the deviations, may be taken off.

2. A method of sensing the shape of a surface of a workpiece along a sensing-line by means of the feed apparatus as in Claim 1, **characterized in that** first of all a workpiece is sensed which has an ideal plane surface, in particular a plane glass disc, that the surface values measured in doing so are stored in dependence upon distance, that then the surface of a workpiece is sensed and the surface values measured in doing so are corrected true to distance by the values stored in dependence upon distance.

## Revendications

1. Appareil d'avancement pour le déplacement linéaire d'un palpeur de mesure de longueur pour la palpation de la forme d'une surface le long d'une ligne de palpation, avec une barre qui est maintenue coulissante dans un guidage et est reliée à un dispositif d'entraînement et qui présente un support pour un palpeur de mesure de longueur ainsi qu'un transmetteur de parcours qui émet des signaux dépendant de la position en translation de la barre, caractérisé par

une mémoire de valeurs de correction (6), en particulier numérique, reliée au transmetteur de parcours et peuvent être raccordée à un palpeur de mesure de longueur (8) pour mémoriser les valeurs de l'écart du trajet du support (7) et, de ce fait, d'un palpeur de mesure de longueur (8) par rapport à une droite en fonction de la position de déplacement du support (7),

un dispositif additionneur (17) qui est raccordé au transmetteur de parcours et à une entrée d'addition (18) duquel est raccordée ou peut être raccordée la mémoire de valeurs de correction (6), à l'autre entrée d'addition (16) duquel est raccordé ou peut être raccordé un palpeur de mesure de longueur (8) tenu par le support (7), et qui envoie les valeurs des écarts dans le même sens, au sens d'une correction des valeurs de longueur du palpeur de mesure de longueur (8), à celui-ci en dépendance de l'emplacement, de telle manière que les valeurs du palpeur de mesure de longueur (8) affranchies des écarts peuvent être prélevées à la sortie du dispositif additionneur.

2. Procédé pour la palpation de la forme d'une surface d'une pièce d'oeuvre le long d'une ligne de palpation au moyen de l'appareil d'avancement selon la revendication 1, caractérisé en ce qu'on palpe tout d'abord une pièce d'oeuvre avec une surface idéalement plane, en particulier un verre plat, qu'on mémorise les valeurs de surface ainsi mesurées en fonction du parcours, qu'ensuite on palpe la surface d'une pièce d'oeuvre et qu'on corrige les valeurs de surface ainsi mesurées conformément au parcours par les valeurs mémorisées dépendant du parcours.